# EUROPÄISCHE PATENTANMELDUNG

(11) **EP 0 805 279 A2**
(43) Veröffentlichungstag der Anmeldung: **05.11.1997**
(21) Anmeldenummer: 97106834.1
(22) Anmeldetag: 24.04.1997
(51) Int. Cl.: F15B 15/28

(54) **Kolben-Zylindereinheit**

(30) Priorität: 30.04.1996 DE 19617347
(71) Anmelder: Weber-Hydraulik GmbH, 74363 Güglingen (DE)
(72) Erfinder: Obermeyer, Günter, 74363 Güglingen (DE); Haselmann. Lothar Dr., 74081 Heilbronn (DE)
(74) Vertreter: Säger, Manfred, Dipl.-Ing.

(57) **Zusammenfassung**

Die Erfindung betrifft eine hydraulische oder pneumatische Kolben-Zylindereinheit mit einem Zylinder und einem darin geführten Kolben, wobei der Zylinder einen unmagnetischen sowie nicht-magnetisierbaren Werkstoff aufweist und der Kolben mit einem radial magnetisierten Magneten versehen ist, der mit einer Schalteinrichtung in dem Zylinder zur Feststellung der Lage des Kolbens zusammenwirkt, die dadurch gekennzeichnet ist, daß in Richtung des Hubes des Kolbens voneinander beabstandet zwei, je ein elektrisches Analogsignal abgebende Sensoren als Schalteinrichtung angeordnet sind, die beide einer Auswerteschaltung zuführbar ist.

## Beschreibung

Die Erfindung betrifft eine hydraulische oder pneumatische Kolben-Zylindereinheit gemäß dem Oberbegriff des Hauptanspruches.

Solche Kolben-Zylindereinheiten sind in einer Vielzahl von Ausführungsformen bekannt. Außerdem sind solche mechanischen Schalter an diesen Einheiten an sich bekannt, welche eine bestimmte Stellung des Kolben nachweisen.

Weiter ist eine gattungsgemäße Kolben-Zylindereinheit gemäß dem Oberbegriff des Hauptanspruches bekannt (EP-0 620 372 A1), bei der ein radial magnetisierter Magnet an dem Kolben festgelegt ist. Ferner ist an der Zylinderwandung eine Schalteinrichtung zur Feststellung der Lage des Kolbens bzw. des an diesem angebrachten Magneten vorgesehen. Das Schaltglied kann hierbei als Reed-Schalter ausgebildet sein.

Von Nachteil bei dieser bekannten Anordnung ist die Ungenauigkeit, mit der die Lage des Kolbens bzw. dessen Magneten festgestellt werden kann. Überdies arbeiten die Reed-Schalter auch ungenau, so daß sich insgesamt eine nur mäßig genaue Feststellung der Lage des Kolbens ergibt.

Der Erfindung liegt deshalb die Aufgabe zugrunde, eine gattungsgemäße Kolben-Zylindereinheit so weiterzubilden, daß damit genauere Feststellungen der Lage des Kolbens möglich ist.

Diese Aufgabe wird bei einer gattungsgemäßen Kolben-Zylindereinheit gemäß dem Oberbegriff des Hauptanspruchs erfindungsgemäß durch dessen kennzeichnende Merkmale gelöst.

Durch die in Richtung des Hubes des Kolbens voneinander beabstandet angeordneten beiden Sensoren, vorzugsweise Hallsensoren werden im Gegensatz zum Digitalsignal beim Stand der Technik durch den Reed-Schalter zwei Analogsignale abgegeben, die jeweils einer Auswerteschaltung zuführbar sind. Jeder Sensor gibt beim Vorbeifahren des Magneten des Kolbens ein sinusartiges Analogsignal aus. Beide sinusartigen Analogsignale sind jedoch hinsichtlich ihrer Maxima voneinander verschoben und bezüglich ihrer Größe unterschiedlich. Etwa der Punkt, in dem sich beide Analogsignale schneiden, d.h., bei welchem ihr Ordinatenwert gleich ist, entspricht der Mittellage des Magneten zwischen den beiden Sensoren. Durch Verwendung von zwei, ein Analogsignal ausgebenden Sensoren läßt sich die Mittellage zwischen diesen beiden Sensoren aufgrund der Auswerteschaltung um ein Vielfaches genauer als mit einem einzigen Reed-Schalter bestimmen.

In zweckmäßiger Ausgestaltung der Erfindung weist die Auswerteschaltung einen Speicher auf, in den in einem Lernmodus der minimale und maximale Amplitudenwert des Analogsignals jedes Hallsensors, vorzugsweise als Analog-Digital von einer Recheneinheit der Auswerteschaltung gewandelter Wert gespeichert wird. Hierbei wird von der Recheneinheit der Auswerteschaltung im Betriebsmodus ständig die Differenz zwischen jedem analog-digital-gewandelten Analogwert und einem hypothetischem Kurvenverlauf gebildet, der vorzugsweise das arithmetische Mittel der beiden gespeicherten minimalen und maximalen Amplitudenwerte unter Bildung von Korrekturwerten berechnet wird. Hierbei werden die Korrekturwerte von einer additiven Konstante bzw. einem Offset und einer multiplikativen Konstante bzw. einem Verstärkungsfaktor gebildet, wobei die jeweils tatsächlich gemessenen Amplitudenwerte mit diesen Korrekturwerten ständig von der Recheneinheit beschickt werden, wodurch sich immer der hypothetische - normierte - Verlauf des Analogsignals ergibt. Sobald diese korrigierten Werte des Ausgangssignals jedes Hallsensors gleichgroß sind, wird von der Mittellage des Magneten zwischen den beiden Hallsensoren ausgegangen.

Weitere zweckmäßige Ausgestaltungen und Weiterbildungen der Erfindung sind in den Unteransprüchen gekennzeichnet.

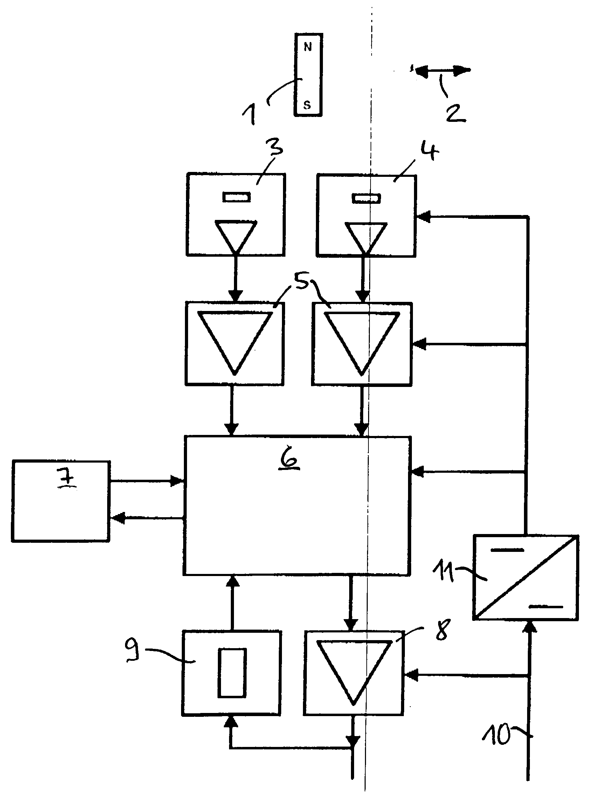

Ein Ausführungsbeispiel wird nachfolgend unter Bezugnahme auf die Zeichnung näher erläutert, die ein schematisches Schaltbild der Erfindung mit einer Auswerteschaltung zeigt.

Mit 1 ist ein an einem - nicht gezeigten - Kolben befestigter, radial mit seinem Nord- und Südpol angeordneter Permanentmagnet vorgesehen, der sich in Richtung des Hubes 2 des Kolbens in seinem Zylinder bewegt.

An der Wandung des Zylinders aus einem unmagnetischen sowie nicht magnetisierbaren Werkstoff sind zwei in Hubrichtung 2 voneinander beabstandet angeordnete Hallsensoren 3, 4 angeordnet, dessen am Ausgang anliegendes elektrisches Analogsignal mittels zweier Verstärker 5 an eine insgesamt mit 6 bezeichnete Auswerteschaltung angelegt ist. Die Auswerteschaltung 6 ist ferner mit einem nicht-flüchtigen Speicher 7, vorzugsweise einem EEPROM versehen. Außerdem ist die Auswerteschaltung 6 mit einer Endstufe 8 und einem über diese rückgekoppelten Eingang 9 versehen, die mittels einer Betriebsspannung 10 versorgt werden. Diese wird über einen insgesamt mit 11 bezeichneten Spannungswandler transformiert und der Auswerteschaltung 6 sowie den Verstärkern 5 und den beiden Hallsensoren 3, 4 zugeführt.

Zunächst wird die Auswerteschaltung 6 in einen Lernmodus gebracht und hierbei der Magnet 1 gemäß der Hubbewegung 2 an den beiden Hallsensoren 3, 4 vorbeigeführt. Hierbei wird jedes am Ausgang des Hallsensors entstehende Analogsignal analog-digital-gewandelt und der minimale sowie maximale Amplitudenwert jedes Hallsensors in dem Speicher 7 abgelegt. In dem nachfolgenden Betriebsmodus bildet die Recheneinheit der Auswerteschaltung 6 ständig die Differenz zwischen jedem der beiden analog-digital-gewandelten Analogwerte der Hallsensoren 3, 4 und einem hypothetischen Kurvenverlauf, der vorzugsweise als arithmetisches Mittel der beiden gespeicherten minimalen und maximalen Amplitudenwerte des Analogsignals unter Bildung von Korrekturwerten gebildet ist. Die Korrekturwerte sind eine additive Konstante bzw. ein Offset und eine multiplikative Konstante bzw. ein Verstärkungsfaktor. Das jeweils gemessene Ausgangssignal jedes Hallsensors 3, 4 wird mittels dieser Korrekturwerte beschickt, so daß stets ein hypothetischer Kurvenverlauf für jeden Hallsensor erhalten wird. Wenn die hypothetischen Werte jedes Hallsensors gleich sind, kann von der Mittellage des Magneten zwischen den beiden Hallsensoren 3, 4 ausgegangen werden.

Außerdem kann aufgrund des Vorzeichens der Korrekturwerte, ob nämlich zu den jeweiligen tatsächlichen ausgangsseitigen Analogwerten jedes Sensors die Korrekturwerte hinzugezählt, oder von diesen abgezogen werden, darauf geschlossen werden, ob ich mich von der einen Seite an die Mittellage oder von der anderen Seite annähere.

## Patentansprüche

1. Hydraulische oder pneumatische Kolben-Zylindereinheit mit einem Zylinder und einem darin geführten Kolben, wobei der Zylinder einen unmagnetischen sowie nicht-magnetisierbaren Werkstoff aufweist und der Kolben mit einem radial magnetisierten Magneten (1) versehen ist, der mit einer Schalteinrichtung in dem Zylinder zur Feststellung der Lage des Kolbens zusammenwirkt,
**dadurch gekennzeichnet,**
daß in Richtung des Hubes (2) des Kolbens voneinander beabstandet zwei, je ein elektrisches Analogsignal abgebende Sensoren (3, 4) als Schalteinrichtung angeordnet sind, die beide einer Auswerteschaltung zuführbar ist.

2. Einheit nach Anspruch 1, dadurch gekennzeichnet, daß die Sensoren als Hallsensoren (3, 4) ausgebildet sind.

3. Einheit nach Anspruch 1 oder 2, dadurch gekennzeichnet, daß die Auswerteschaltung (6) einen Speicher (7) aufweist, in den in einem Lernmodus der minimale und der maximale Amplitudenwert des ausgangsseitigen, elektrischen Analogsignals jedes Hallsensors (3, 4) gespeichert wird.

4. Einheit nach einem der Ansprüche 1 bis 3, dadurch gekennzeichnet, daß in dem Speicher (7) der Digitalwert des von der Recheneinheit der Auswerteschaltung (7) gebildeten minimalen und maximalen Amplitudenwerts des zuvor analog-digital-gewandelten Analogsignals jedes Hallsensors (3, 4) gespeichert wird.

5. Einheit nach einem der Ansprüche 1 bis 4, dadurch gekennzeichnet, daß der Speicher ein nicht-flüchtiger Speicher ist.

6. Einheit nach Anspruch 5, dadurch gekennzeichnet, daß der Speicher von einem EEPROM gebildet ist.

7. Einheit nach einem der Ansprüche 1 bis 6, dadurch gekennzeichnet, daß die Recheneinheit der Auswerteschaltung (7) in einem Betriebsmodus ständig die Differenzen zwischen jedem analog-digital-gewandelten Analogwert jedes Hallsensors (3, 4) und einem hypothetischen Kurvenverlauf bildet.

8. Einheit nach Anspruch 7, dadurch gekennzeichnet, daß der hypothetische Kurvenverlauf durch das arithmetische Mittel der beiden gespeicherten minimalen und maximalen Amplitudenwerte jedes Analogsignals unter Bildung von Korrekturwerten berechnet wird.

9. Einheit nach Anspruch 8, dadurch gekennzeichnet, daß die Korrekturwerte mittels einer additiven Konstante bzw. einem Offset und einer multiplikativen Konstante bzw. einem Verstärkungsfaktor gebildet sind.

10. Einheit nach einem der Ansprüche 1 bis 9, dadurch gekennzeichnet, daß die Differenzen mit einem positiven oder negativen Vorzeichen zu dem hypothetischen Kurvenverlauf berechnet wird.
